# EUROPÄISCHE PATENTSCHRIFT

(11) **EP 2 995 825 B1**
(45) Veröffentlichungstag und Bekanntmachung des Hinweises auf die Patenterteilung: **04.07.2018**
(21) Anmeldenummer: 15183312.6
(22) Anmeldetag: 01.09.2015
(51) Int. Cl.: F16C 11/06, F16M 11/14

(54) **PENDELAUFLAGE**
TOGGLE LOCATOR
SUPPORT OSCILLANT

(30) Priorität: 14.09.2014 DE 102014013292; 04.10.2014 DE 102014015227
(43) Veröffentlichungstag der Anmeldung: 16.03.2016
(73) Patentinhaber: Kipp Verpachtungen e.K., 72172 Sulz a.N. (DE)
(72) Erfinder: Kruck, Stefan Andreas, 78733 Aichhalden (DE); Töws, Ottilie, 72172 Sulz a.N. (DE); Schanz, Hans, 72189 Vöhringen (DE)
(74) Vertreter: Kohler Schmid Möbus Patentanwälte

(56) Entgegenhaltungen:
- DE-B3-102006 008 871
- JP-A- 2010 196 847
- US-A- 3 945 737
- US-A- 5 597 258
- US-A1- 2002 012 567

## Beschreibung

Die Erfindung betrifft einen Werkstück-Roboter umfassend eine pendelnd gelagerte, als Kugelpfannengelenk ausgebildete Auflagevorrichtung zur Auflage und/oder Anlage von Werkstücken, wobei die Auflagevorrichtung aus wenigstens zwei Bauteilen besteht, wobei eines eine wenigstens einteilige Pfanne und das andere ein wenigstens einteiliger Kugelkörper ist.

Eine solche Auflagevorrichtung ist aus der EP 0 892 184 B1 bekannt geworden.

Pendelnd gelagerte, als Kugelpfannengelenk ausgebildete Auflagevorrichtungen, auch Pendelauflagen genannt, werden zur statisch eindeutigen Auflage von Werkstücken mit mehr oder weniger exakter Oberfläche verwendet. Pendelauflagen ohne Federrückstellung weisen den Nachteil auf, dass diese in einer undefinierten Schräglage, beispielsweise derjenigen der Oberfläche des zuletzt aufgelegten Werkstücks, stehen bleiben. Bei Auflage eines Folgeteiles kann es zum Festsitzen in dieser Position kommen, womit dieses Folgeteil nicht in richtiger, gewünschter Position aufliegt.

Bekannte Pendelauflagen mit Federrückstellung sind aus vielen Bauteilen zusammengesetzt, was eine teure Herstellung verursacht und sich als entsprechend wartungsanfällig erweisen kann.

Bei der aus der EP 0 892 184 B1 bekannten Ausführung wird mit mindestens zwei federnd belasteten Gleitstücken gearbeitet, welche quer zur Gelenkachse angeordnet sind. Die Kugelpfanne ist hierbei nicht komplett als Kugelausschnitt ausgebildet, sondern weist einen Übergang zu einem kleineren Radius auf, welcher die federnd belasteten Gleitstücke bei Schräglage von Kugelkörper zu Pfanne belastet und somit eine Rückfederung bewirkt.

### Aufgabe der Erfindung

Aufgabe vorliegender Erfindung ist es, einen Werkstück-Roboter mit einer Pendelauflage zu schaffen, welche aus wenigen Bauteilen bestehen kann und wartungsfreundlich ist. Zudem soll die Pendelauflage schmutzunempfindlich sein und wenig Bauraum einnehmen. Im kräftefreien Zustand soll sich die Auflagefläche selbstständig in die Grundstellung zurückstellen.

### Kurze Beschreibung der Erfindung

Diese Aufgabe wird erfindungsgemäß gelöst durch einen Werkstück-Roboter für die Handhabung und/oder den Transport von Werkstücken, umfassend wenigstens einen beweglichen Roboterarm, der mit einer Auflagevorrichtung versehen ist,
wobei die Auflagevorrichtung pendelnd gelagert, als Kugelpfannengelenk ausgebildet ist zur Auflage und/oder Anlage von Werkstücken, bestehend aus wenigstens zwei Bauteilen, wobei eines eine wenigstens einteilige Pfanne und das andere ein wenigstens einteiliger Kugelkörper ist,
wobei ein Zapfen und eine um den Zapfen umlaufende Ausnehmung wechselseitig an einem der beiden Bauteile Pfanne oder Kugelkörper ausgebildet sind,
und wobei zwischen dem Zapfen und der Ausnehmung wenigstens ein elastisch verformbares Federelement mit im unbelasteten Zustand vorzugsweise rotationstorischer Außenfläche angeordnet ist, welches in Grundstellung von jeder radialen Richtung etwa gleich vorbelastet ist.

Mit dem Werkstück-Roboter können Werkstücke zuverlässig und schonend für eine Handhabung (z.B. ein Drehen) oder einen Transport automatisch ergriffen (oder zumindest kontaktiert) und abgelegt (oder zumindest dekontaktiert) werden. Die Auflagevorrichtung ist durch die Federrückstellung für das Ergreifen (oder Kontaktieren) stets definiert ausgerichtet; ein Verkanten wird vermieden. Bei mehreren (automatisiert) beweglichen Roboterarmen wird das Werkstück typischerweise zwischen den Auflagevorrichtungen dieser Roboterarme eingespannt. Bei nur einem (automatisiert) beweglichen Roboterarm mit einer erfindungsgemäßen Auflagevorrichtung dient der Roboterarm beispielsweise nur zum Verschieben des Werkstücks oder zum Verspannen eines Werkstücks auf festen Strukturen, oder der Roboterarm wirkt beispielsweise mit einem weiteren, (automatisiert) beweglichen Roboterarm mit lediglich einer einfachen (nicht mit Federrückstellung versehener) Auflagefläche für das Werkstück zusammen. Mit dem Werkstück-Roboter können Werkstücke zuverlässig und schonend für eine Handhabung (z.B. ein Drehen) oder einen Transport automatisch ergriffen (oder zumindest kontaktiert) und abgelegt (oder zumindest dekontaktiert) werden. Die Auflagevorrichtung ist durch die Federrückstellung für das Ergreifen (oder Kontaktieren) stets definiert ausgerichtet; ein Verkanten wird vermieden. Bei mehreren (automatisiert) beweglichen Roboterarmen wird das Werkstück typischerweise zwischen den Auflagevorrichtungen dieser Roboterarme eingespannt. Bei nur einem (automatisiert) beweglichen Roboterarm mit einer erfindungsgemäßen Auflagevorrichtung dient der Roboterarm beispielsweise nur zum Verschieben des Werkstücks oder zum Verspannen eines Werkstücks auf festen Strukturen, oder der Roboterarm wirkt beispielsweise mit einem weiteren, (automatisiert) beweglichen Roboterarm mit lediglich einer einfachen (nicht mit Federrückstellung versehenen) Auflagefläche für das Werkstück zusammen.

Mit der im Rahmen der Erfindung vorgesehenen Pendelauflage können Werkstücke gut gehandhabt und insbesondere gut bearbeitet werden. Durch das elastische Federelement werden Kugelkörper und Pfanne selbststätig relativ zueinander in die Grundstellung gebracht, wenn die Auflagevorrichtung von außen keine Kräfte erfährt. Dies erleichtert das automatische Handhaben der Werkstücke, insbesondere beim Auflegen der Werkstücke mit einem automatischen Werkstücktransportroboter. Im Rahmen der Erfindung werden nur sehr wenige Bauteile benötigt; im einfachsten Fall besteht die Auflagevorrichtung lediglich aus einem (einteiligen) Kugelkörper, einer (einteiligen) Pfanne und dem Federelement. Mit dem Kugelkörper wird typischerweise die Ausnehmung verschlossen, so dass diese und das Federelement in der Ausnehmung von außen nicht verschmutzen. Zapfen und Ausnehmung können leicht in oder an Kugelkörper und Pfanne integriert werden, was einen kompakten Bau ermöglicht. Insbesondere kann der Zapfen einen kleineren (größten) radialen Durchmesser aufweisen als der Kugelkörper, was besonders platzsparend ist.

Bevorzugt umschließt die Pfanne den Kugelkörper über etwas mehr als die Hälfte des Kugeldurchmessers bzw. über den Kugelmittelpunkt hinaus, so dass der Kugelkörper unverlierbar in der Pfanne gehalten ist. Der Kugelkörper wird dafür typischerweise in die Pfanne eingelegt, solange diese noch einen radial weiten Öffnungsrand aufweist; nach dem Einlegen wird der Öffnungsrand, der über den Kugelmittelpunkt des Kugelkörpers übersteht, durch plastische Verformung radial verengt (verprägt), so dass der verengte Öffnungsrand den Kugelkörper in der Pfanne hält. Alternativ kann aber auch beispielsweise ein Haltering mit kleinerem Durchmesser als das Kugelteil nach Einlegen des Kugelkörpers in die Pfanne auf die Pfanne aufgelötet werden. Ebenso kann ein federnder Sprengring zur Sicherung des Kugelkörpers eingesetzt werden.

Das Material des Kugelkörpers kann härter als das Material der Pfanne gewählt werden, oder das Material der Pfanne kann härter als das Material des Kugelkörpers gewählt werden, oder die Härte der Materialien von Kugelkörper und Pfanne können gleich hart (und insbesondere identisch) gewählt werden. Bevorzugt werden als Materialien für die Pfanne und den Kugelkörper Stahl gewählt.

Am Kugelkörper und/oder an der Pfanne können Schlüsselflächen vorgesehen sein, insbesondere um ein Verschrauben, etwa mit einem Formbauteil, zu erleichtern.

Typischerweise ist auf dem Zapfen das Federelement angebracht, welches radial elastisch verformbar ist. Als Federelement kann vorzugsweise ein O-Ring, beispielsweise nach ISO 3601 eingesetzt werden, welcher millionenfach produziert wird, hierdurch kostengünstig und in verschiedenen Härtegraden erhältlich ist.

Es kann zweckmäßig sein, den Schwenkwinkel der Bauteile gegeneinander zu begrenzen. Hierzu kann als vorteilhafte Ausgestaltung der Erfindung eine entsprechende Länge des Kugelzapfens gewählt werden, um hiermit einen Anschlag oder einen Anschlagpunkt zwischen Zapfen und Ausnehmung zu schaffen.

Am Kugelkörper ist vorzugsweise an dem seinem Kugelteil entgegengesetzten Ende eine Bohrung, insbesondere eine Gewindebohrung vorgesehen, in welche beispielsweise ein Bolzen eingeschraubt werden kann, der seinerseits zur Befestigung der Auflagevorrichtung dienen kann. Bei dieser Verwendung liegt die Werkstückoberfläche an der Pfanne an.

Eine weitere Verwendung der Pendelauflage sieht vor, das Werkstück an der Auflagefläche aufliegen zu lassen und die Pfanne zur Befestigung beispielsweise an einer Vorrichtungsgrundplatte anzuschrauben. Hierzu kann die Pfanne direkt mit einer Gewindebohrung versehen werden oder einen überstehenden Gewindezapfen aufweisen.

Als vorteilhafte Ausgestaltung der Pendelauflage wird die am Werkstück anliegende Fläche mit einer Riffelung versehen, was ein Verkrallen in der zugehörigen Werkstückfläche zur Folge hat. Somit kann ein auf die Pendelauflage aufgespanntes Werkstück zusätzlich mit einem Formschluss innerhalb der Riffelung gehalten werden.

Auflagevorrichtungen erfindungsgemäßer Werkstück-Roboter werden insbesondere zur Auflage oder Anlage bzw. zum Ausrichten und Halten von Werkstücken bei der Werkstückbearbeitung sowie beim Werkstücktransport und der Werkstückhandhabung eingesetzt.

### Bevorzugte Ausführungsformen der Erfindung

Eine bevorzugte Ausführungsform des erfindungsgemäßen Werkstück-Roboters sieht vor, dass eine Achse des Zapfens den Mittelpunkt des Kugelkörpers schneidet, wobei der Zapfen als vorzugsweise konisches oder zylindrisches Formelement mit dem Kugelkörper, vorzugsweise als einteiliges Element, ausgestaltet ist. Bei dieser Symmetrie kann auf einfache Weise eine gleiche Rückstellkraft bezüglich aller radialen Richtungen eingerichtet werden. Die Ausbildung des Zapfens am Kugelkörper ist besonders einfach zu fertigen und mechanisch robust. Alternativ kann auch der Zapfen an der Pfanne ausgebildet sein, insbesondere einteilig mit der Pfanne; der Zapfen ragt dann in den Kugelkörper hinein, in welchem die Ausnehmung ausgebildet ist, was einen besonders kompakten Bau ermöglicht.

Bei einer anderen, vorteilhaften Ausführungsform ist an dem Kugelkörper oder an der Pfanne eine Auflagefläche für das Werkstück ausgebildet, insbesondere wobei die Auflagefläche im Wesentlichen eben ausgebildet ist. Auf die Auflagefläche wird das Werkstück aufgelegt und bei der Bearbeitung unterstützt. Eine ebene Auflagefläche ist sehr universell bei verschiedenen Werkstücktypen einsetzbar.

Besonders bevorzugt ist eine Ausführungsform, bei der die Auflagevorrichtung ein drittes Bauteil, nämlich ein Formbauteil mit einer Auflagefläche für das Werkstück aufweist, insbesondere wobei die Auflagefläche im Wesentlichen eben ausgebildet ist,
und dass das Formbauteil am Kugelkörper oder an der Pfanne befestigbar ist, insbesondere in einer Bohrung, vorzugsweise Gewindebohrung, des Kugelkörpers oder der Pfanne. Das Formbauteil ermöglicht eine Anordnung des Werkstücks in einem beliebigen, insbesondere weiteren Abstand vom Kugelpfannengelenk, ohne dass die Pfanne oder der Kugelkörper entsprechend dimensioniert werden muss. Oftmals stehen verschiedene Typen, insbesondre mit unterschiedlichen Längen, von Formbauteilen zur Verfügung, wodurch eine Anpassung an eine jeweilige Bearbeitungsaufgabe erfolgen kann. Das Formbauteil kann auch an einem hervorstehenden Befestigungszapfen, insbesondre Gewindezapfen, an der Pfanne oder dem Kugelkörper befestigbar sein.

Vorteilhaft ist weiterhin eine Weiterbildung der obigen Ausführungsformen, wobei die dem Werkstück zugewandte Auflagefläche von Kugelkörper oder Pfanne oder Formbauteil eine wenigstens teilweise unterbrochene Oberfläche, vorzugsweise mit Riffelung, aufweist. Durch die Riffelung kann ein besserer Halt, insbesondere bei Kraftschluss, zwischen Werkstückoberfläche und Auflagefläche erreicht werden.

Besonders bevorzugt ist eine Ausführungsform, bei der als Federelement ein O-Ring angeordnet ist. Der O-Ring ist besonders kostengünstig, robust und einfach zu handhaben.

Eine vorteilhafte Weiterbildung dieser Ausführungsform sieht vor, dass der O-Ring auf dem Zapfen aufsitzt und in Grundstellung über seinen gesamten Umfang zwischen dem Zapfen und der Ausnehmung radial eingeklemmt ist, insbesondere so dass in Grundstellung der Zapfen und die Ausnehmung koaxial ausgerichtet sind. Durch die radial allseitige Anlage des O-Rings in Grundstellung wird die Grundstellung stabilisiert. Falls in Grundstellung der O-Ring hierbei bereits elastisch radial verformt (gequetscht) ist, wird die Grundstellung mit noch größerer Kraft (Rückstellkraft) stabilisiert. Der O-Ring kann unter Zugspannung auf dem Zapfen aufsitzen, so dass die axiale Position des O-Rings auf dem Zapfen leicht fixiert werden kann, insbesondere im Zusammenspeil mit einer Nut oder Führung auf dem Zapfen. Über eine koaxiale Ausrichtung kann eine in alle radiale Richtungen gleiche Rückstellkraft aus der Grundstellung auf einfache Weise erreicht werden.

Bei einer anderen Weiterbildung weist der O-Ring einen im unbelasteten Zustand kreisförmigen, ovalen oder rechteckigen Querschnitt auf. Diese Querschnitte sind für die Erfindung gut geeignet. Mit einem radialen oder ovalen Querschnitt kann eine mit zunehmender Auslenkung überproportional ansteigende Rückstellkraft erreicht werden. Ein rechteckiger Querschnitt kann eine axial ausgedehnte, gleichmäßige Anlage an die Ausnehmung bzw. deren Wand erleichtern.

Bevorzugt ist auch eine Weiterbildung, bei der der O-Ring von einem äußeren Ende des Zapfens beabstandet angeordnet ist. Dann kann das äußere Ende des Zapfens leicht als Anschlag (an der Innenwand der Ausnehmung) genutzt werden.

Eine vorteilhafte Ausführungsform sieht vor, dass der Zapfen und die Ausnehmung jeweils im Wesentlichen kreiszylindrisch ausgebildet sind. Dies ist besonders einfach zu fertigen. Im allgemeinen sind im Rahmen der Erfindung rotationssymmetrische Bauformen von Zapfen und Ausnehmung (sowie Federelement) bevorzugt, um eine in alle radiale Richtungen gleiche Rückstellkraft zu erreichen.

Besonders bevorzugt ist eine Ausführungsform, bei der die Ausnehmung geschlossen ausgebildet ist, insbesondere wobei die Ausnehmung durch die Pfanne und den Kugelkörper allseitig begrenzt ist. Die geschlossene Ausbildung der Ausnehmung vermeidet eine Verschmutzung von außen im Inneren der Ausnehmung, insbesondere im Bereich des Federelements. Zudem beugt eine geschlossene Ausbildung Fehlfunktionen (durch eingeklemmte Gegenstände) und Verletzungen bei Monteuren und Bedienpersonal (durch eingeklemmte Finger) vor.

Bevorzugt ist eine Ausführungsform, bei der das wenigstens eine Federelement zumindest in einer aus der Grundstellung ausgelenkten Stellung auch axial belastet wird, insbesondere wobei während eines ersten Teils der Auslenkung das wenigstens eine Federelement zunächst nur radial belastet wird, und während eines zweiten Teils der Auslenkung auch axial belastet wird. Durch die Einbeziehung von axialer Belastung kann die Rückstellkraft beim Federelement gezielt gesteigert werden. Durch eine axiale Belastung erst ab einer gewissen Mindestauslenkung kann die Rückstellkraft an den Grad der Auslenkung angepasst werden, so dass bei geringen Auslenkungen nur geringe Rückstellkräfte erfahren werden, wodurch die Werkstückhandhabung erleichtert wird, und bei großen Auslenkungen große Rückstellkräfte erreicht werden, insbesondere um große Auslenkungen zu erschweren und einen harten Anschlag zu vermeiden.

Besonders vorteilhaft ist eine Ausführungsform, bei der am Zapfen wenigstens eine Nute oder eine Führung ausgebildet ist, in welche das wenigstens eine Federelement eingesetzt ist. Die Nute oder Führung hält das Federelement auf einfache Weise axial in Position, insbesondere bei Belastung durch Auslenkung der Auflagevorrichtung aus der Grundstellung.

Vorteilhaft ist auch eine Ausführungsform, die vorsieht, dass die Länge des Zapfens so gewählt ist, dass sich ein winkelbegrenzender Anschlag oder Anschlagpunkt an der Ausnehmung ergibt,
insbesondere wobei der Zapfen an seinem die Ausnehmung berührenden Ende eine zur Ausnehmung formangepasste Geometrie aufweist. Durch den Anschlag kann die Auslenkung der Auflagevorrichtung (bzw. der Pfanne gegenüber dem Kugelkörper) auf einfache Weise begrenzt werden. Durch eine formangepasste Geometrie kann der Anschlag linienhaft oder flächig ausgebildet werden, wodurch der lokale Krafteintrag in das Material verringert und damit auch der Verschleiß verringert wird.

Bei einer weiteren Ausführungsform ist zwischen Zapfen und der Ausnehmung ein Federelement mit passgenauer Negativform der beiden Elemente Zapfen und Ausnehmung angeordnet. Die passgenaue Negativform kann insbesondere durch Ausgießen gefertigt werden. Dadurch wird ein großflächiger Krafteintrag in das Federelement bei den Auslenkungen erreicht, was den Verschleiß reduzieren kann.

Vorteilhaft ist auch eine Ausführungsform, bei der wenigstens eines der Bauelemente Kugelkörper oder Pfanne mit einer Bohrung, vorzugsweise Gewindebohrung, an einem außenliegenden Vorrichtungsende versehen ist, insbesondere wobei die Bohrung einer Auflagefläche für das Werkstück gegenüberliegt. Die Bohrung (alternativ auch ein hervorstehender Befestigungszapfen, insbesondere Gewindezapfen) erleichtert eine Befestigung der Auflagevorrichtung, insbesondere an einem Formbauteil. Man beachte, dass Bohrungen, insbesondere Gewindebohrungen, und Befestigungszapfen, insbesondere Gewindezapfen, im Rahmen der Erfindung an grundsätzlich beliebigen Stellen und Seiten von Pfanne, Kugelkörper oder auch Formbauteil möglich sind.

Eine bevorzugte Ausführungsform sieht vor, dass der Werkstück-Roboter wenigstens zwei bewegliche Roboterarme umfasst, die jeweils mit einer oben beschriebenen Auflagevorrichtung versehen sind.

Bei einer bevorzugten Weiterbildung ist vorgesehen, dass der Werkstück-Roboter als ein Greifer ausgebildet ist, wobei die zwei Roboterarme an einem Grundkörper in eine Klemmrichtung aufeinander zu und voneinander weg motorisch verfahrbar sind, und der Grundkörper durch Achsen translatierbar und/oder rotierbar ist.

Weiterhin fällt in den Rahmen der vorliegenden Erfindung eine Verwendung eines oben beschriebenen, erfindungsgemäßen Werkstück-Roboters zur Handhabung und/oder zum Transport von Werkstücken, mit folgenden Schritten:
a) in Grundstellung der Auflagevorrichtung des wenigstens einen Roboterarms wird die Auflagevorrichtung des wenigstens einen Roboterarms mit dem Roboterarm an das Werkstück herangefahren und am Werkstück angeordnet, insbesondere wobei eine Auflagefläche der Auflagevorrichtung in einer Richtung senkrecht zur Auflagefläche an eine Werkstückseite angelegt wird,
b) das Werkstück wird mittels des wenigstens einen Roboterarms gehandhabt und/oder transportiert, und die Auflagevorrichtung des wenigstens einen Roboterarms wird vom Werkstück abgehoben,
   wobei für die Handhabung und/oder den Transport des Werkstücks und/oder das Abheben die Pfanne relativ zum Kugelkörper bewegt wird,
   insbesondere wobei sich die Relativbewegung von Pfanne und Kugelkörper durch ein Verspannen des Werkstücks mittels des wenigstens einen Roboterarms ergibt,
c) die Auflagevorrichtung nimmt selbsttätig wieder die Grundstellung ein, und
d) sodann werden die Schritte a) bis c) wenigstens einmal mit einem jeweiligen weiteren Werkstück wiederholt. Im Rahmen der erfindungsgemäßen Verwendung kommt es nicht zu Fehlorientierungen der Auflagefläche (Werkstückauflage) infolge der letzten Stellung der Auflagevorrichtung durch die die Handhabung oder das Ergreifen/Loslassen des zuletzt gehandhabten Werkstücks. Damit kann die Fortsetzung der Handhabung oder des Transports mit dem nächsten Werkstück mit großer Zuverlässigkeit erfolgen. Insbesondere ist es in der Regel nicht notwendig, die korrekte Grundstellung der Auflagevorrichtung vor dem Anlegen an das nächste Werkstücks durch besondere Maßnahmen wie Sensorenabfragen und eine Ausrichtmotorik sicherzustellen. Die verwendete, erfindungsgemäße Auflagevorrichtung am Roboterarm ist einfach und kompakt aufgebaut und kostengünstig herzustellen.

### Detaillierte Beschreibung der Erfindung und Zeichnung

Ausführungsbeispiele der Erfindung sind in den Figuren dargestellt und werden im Folgenden näher beschrieben.
- Fig. 1:: Schematische Seiten-Schnittansicht einer ersten Bauform einer Auflagevorrichtung (Pendelauflage) für die Erfindung in Grundstellung. Variante mit Zapfen am Kugelkörper angeordnet.
- Fig. 2:: Schematische Seiten-Schnittansicht Pendelauflage von Fig. 1 in belasteter (ausgelenkter) Stellung. Variante mit Zapfen am Kugelkörper angeordnet.
- Fig. 3:: Schematische Seiten-Schnittansicht einer zweiten Bauform einer Auflagevorrichtung (Pendelauflage) für die Erfindung in Grundstellung. Variante mit Zapfen an der Pfanne angeordnet.
- Fig. 4:: Schematische Seiten-Schnittansicht einer dritten Bauform einer Auflagevorrichtung (Pendelauflage) für die Erfindung in ausgelenkter Stellung. Variante mit Riffelung an der Auflagefläche und mit Gewindezapfen an der Pfanne.
- Fig. 5:: Schematische Seiten-Schnittansicht einer vierten Bauform einer Auflagevorrichtung (Pendelauflage) für die Erfindung in Grundstellung. Variante mit rechteckigem O-Ring, Schlüsselfläche und Gewindezapfen.
- Fig. 6:: Schematische Seitenansicht der Auflagevorrichtung von Fig. 5.
- Fig. 7:: Schematische Aufsicht auf die Auflagevorrichtung von Fig. 5.
- Fig. 8:: Schematische Seiten-Schnittansicht einer fünften Bauform einer Auflagevorrichtung (Pendelauflage) für die Erfindung in Grundstellung. Variante mit einer Nut für einen O-Ring mit schrägem Nutgrund und angepasster Geometrie des Zapfens an seinem entfernten Ende.
- Fig. 9:: Schematische Seiten-Schnittansicht der Auflagevorrichtung von Fig. 8, in ausgelenkter Stellung.
- Fig. 10a-10e:: Schematische Illustration des Ablaufs der Verwendung einer Auflagevorrichtung bei der Bearbeitung eines Werkstücks, zur allgemeinen Erläuterung.
- Fig. 11:: Schematische, teilweise geschnittene Seitenansicht einer sechsten Bauform einer erfindungsgemäßen Auflagevorrichtung (Pendelauflage) für die Erfindung in Grundstellung. Variante mit Formbauteil und befestigt an einem Maschinentisch.
- Fig. 12a-12d:: Schematische Illustration des Ablaufs der erfindungsgemäßen Verwendung von Auflagevorrichtungen bei der Handhabung oder dem Transport eines Werkstücks mittels eines Werkstück-Roboters, an dessen Roboterarmen die Auflagevorrichtungen angeordnet sind.

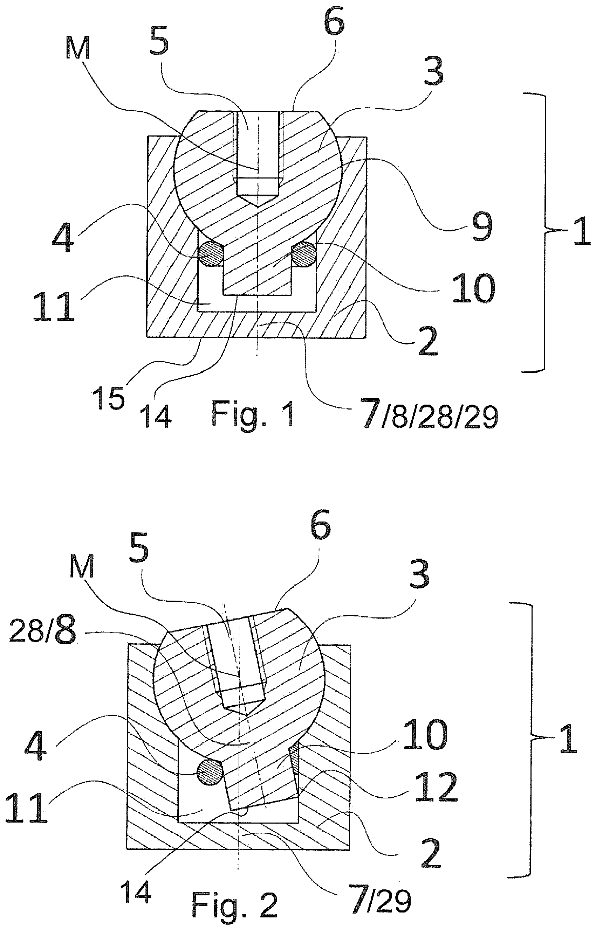

Beim ersten Ausführungsbeispiel einer Auflagevorrichtung 1 für die Erfindung von **Fig. 1** und **Fig. 2** sind Zapfen 10 und Kugelkörper 3 als ein Bauteil ausgebildet. Alternativ sind auch mehrteilige Lösungen denkbar. Als Federelement 4 ist hier ein O-Ring gewählt, welcher als Normteil erhältlich ist.

Als vorteilhafte Ausgestaltung kann eine Nute (nicht dargestellt in Fig. 1, 2) angebracht werden, mit der die Position des O-Rings genau eingehalten werden kann. Entsprechend der Position und dem Abstand vom Gelenkmittelpunkt (Kugelmittelpunkt M) kann die Rückfederkraft gesteuert werden. Alternativ sind auch mehrere O-Ringe als Federelemente denkbar.

In der gezeigten Bauform der Auflagevorrichtung (Pendelauflage) 1 von Fig. 1 ist ein Kugelkörper 3 vorgesehen, der von einer Pfanne 2 zu mehr als der Hälfte bezüglich seines Kugelteils, also über seinen Kugelmittelpunkt M hinaus, umschlossen wird. Am hier unteren Ende des Kugelkörpers 3 ist der hier kreiszylindrische Zapfen 10 ausgebildet, der in eine hier ebenfalls kreiszylindrische Ausnehmung 11 der Pfanne 2 ragt. In Fig. 1 ist die unausgelenkte Grundstellung gezeigt.

Auf dem Zapfen 10 ist das Federelement 4, hier der O-Ring mit im unbelasteten (ungequetschten) Zustand kreisförmigem Querschnitt, angeordnet. Der O-Ring ist dabei axial beabstandet von einem äußeren Ende 14 des Zapfens 10 angeordnet.

Das Federelement 4 ist in radialer Richtung zwischen der axialen Wand der Ausnehmung 11 und dem Zapfen 10 angeordnet, wobei das Federelement 4 an der Wand der Ausnehmung 11 und dem Zapfen 10 anliegt ("eingeklemmter O-Ring"); in der gezeigten Bauform wird der O-Ring dabei radial aber nicht oder nur unmerklich verformt. In der in Fig. 1 gezeigten Grundstellung stimmt die Achse 29 der Ausnehmung (bzw. die Pfannenachse 7) mit der Achse 28 des Zapfens (bzw. der Achse 8 des Kugelkörpers), die den Kugelmittelpunkt M schneidet, überein.

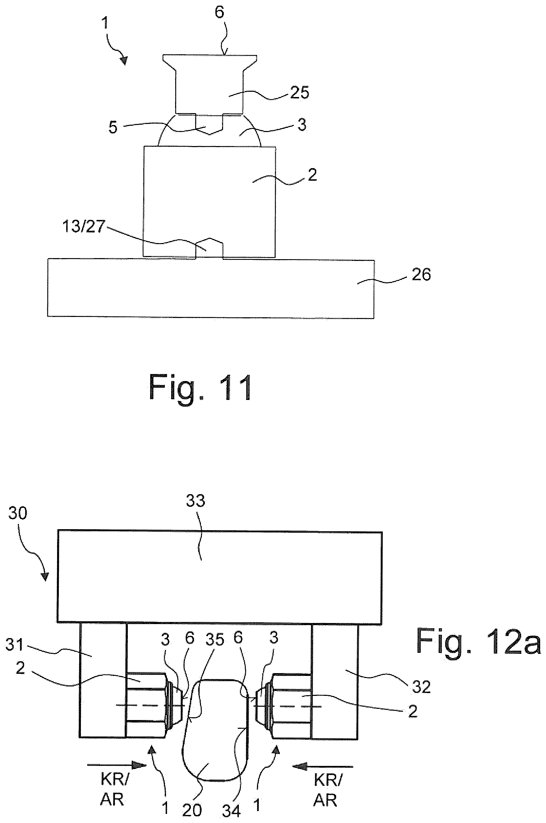

An der Oberseite des Kugelkörpers 3 ist eine ebene Auflagefläche 6 für ein Werkstück (nicht dargestellt) ausgebildet. Ebenso ist an der Oberseite eine Bohrung 5, hier eine Gewindebohrung, vorgesehen, insbesondre um ein Formbauteil (nicht dargestellt) zu befestigen, das eine alternative Auflagefläche ausbildet. Man beachte, dass auch die ebene Unterseite 15 der Pfanne 2 als Auflagefläche für ein Werkstück verwendet werden könnte; in diesem Fall könnte die Bohrung 5 zur Befestigung der Auflagevorrichtung 1 dienen, wobei die Auflagevorrichtung 1 "auf den Kopf" gestellt würde. Im Rahmen der Erfindung wird die Auflagevorrichtung 1 an einem Roboterarm eines Werkstück-Roboters angeordnet (vgl. Fig. 12a-12d).

In der in Fig. 2 gezeigten ausgelenkten Stellung ist das Federelement 4 auf der rechten Seite elastisch verformt, wodurch eine Rückstellkraft (zur in Fig. 1 gezeigten Stellung hin) erzeugt wird. Das untere Ende 14 des Zapfens 10 liegt mit einem Anschlagpunkt 12 an der Wand der Ausnehmung 11 an, wodurch die Auslenkung der Auflagevorrichtung 1 (hier des Kugelkörpers 3 in der Pfanne 2) begrenzt wird.

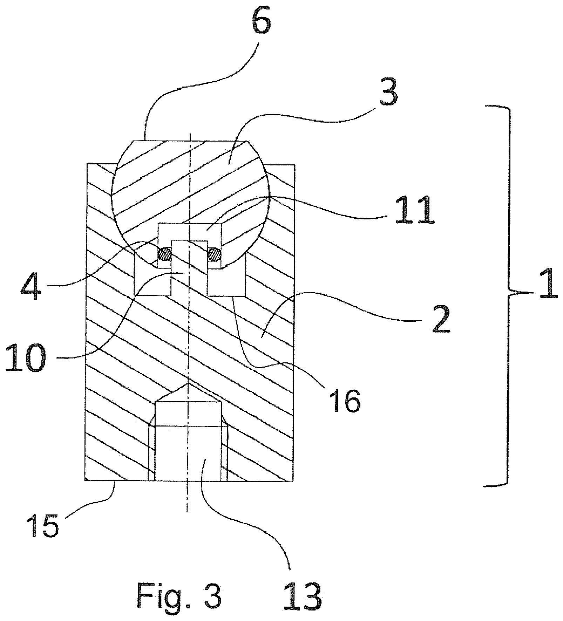

Ein zweites Ausführungsbeispiel der Auflagevorrichtung 1 für die Erfindung ist in der **Fig. 3** dargestellt und wird im Folgenden näher beschrieben. Es werden vor allem die Unterschiede zur ersten Bauform erläutert.

Bei diesem Ausführungsbeispiel sind Zapfen 10 und Pfanne 2 als ein Bauteil ausgebildet. Alternativ sind auch mehrteilige Lösungen denkbar.

Bei dieser Bauform der Auflagevorrichtung 1 ragt der Zapfen 10 von einem Pfannengrund 16 in Richtung auf den Kugelkörper 3 in eine Ausnehmung 11 des Kugelkörpers 3 hinein. Auf dem Zapfen 10 sitzt wiederum ein Federelement 4 in Gestalt eines O-Rings auf. Dieser ist zwischen dem Zapfen 10 und der Ausnehmung 11 eingeklemmt.

An der Oberseite des Kugelkörpers 3 ist die ebene Auflagefläche 6 für das Werkstück ausgebildet. An der Unterseite 15 der Pfanne ist hier eine Bohrung 13, nämlich eine Gewindebohrung, zur Befestigung vorgesehen.

Es ist ein Ausführungsbeispiel denkbar, welches am Zapfen 10 eine an die Ausnehmung angepasste Geometrie (nicht dargestellt) aufweist. Hiermit kann eine größere Kontaktfläche erzeugt werden und am Anschlagpunkt 12 (vgl. Fig. 2) entsteht statt des geometrischen Punktes eine Fläche.

Weiterhin ist ein Ausführungsbeispiel denkbar, welches zwischen Zapfen 10 und der Ausnehmung 11 ein Federelement mit passgenauer Negativform (nicht dargestellt) der beiden Elemente Zapfen 10 und Ausnehmung 11 aufweist. Dies kann durch ein Formfederelement (Formdichtung) oder durch Eingießen eines Federelementes erreicht werden, z.B. eingegossene Gummierung.

Darüber hinaus ist eine vorteilhafte Ausgestaltung denkbar, welche wenigstens eines der Elemente Kugelkörper 3 oder Pfanne 2 mit einer Bohrung 5 oder 13, vorzugsweise Gewindebohrung, am außenliegenden Vorrichtungsende versieht. Hierdurch kann die Pendelauflage beispielsweise an einer Vorrichtungsgrundplatte befestigt werden. Das Gewinde wird so gewählt, dass dieses zur Befestigungsseite hin vorhanden ist. Je nach Gestaltungsvariante kann das Gewinde also in der Pfanne 2 oder dem Kugelkörper 3 angebracht sein.

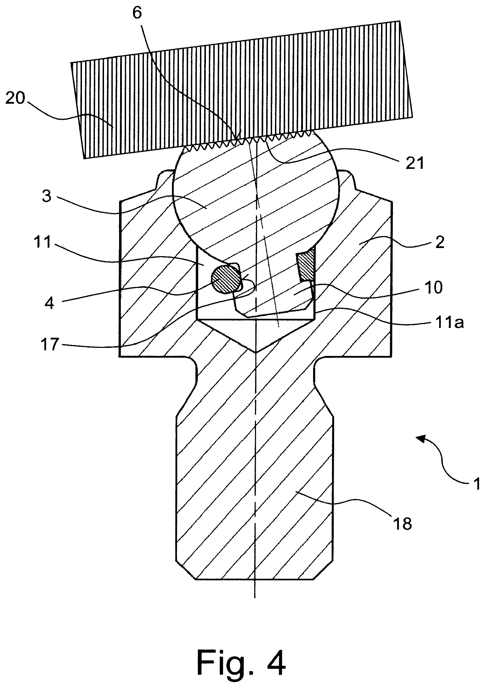

Die **Fig. 4** zeigt eine dritte Bauform einer Auflagevorrichtung 1 für die Erfindung; wiederum werden vor allem die Unterschiede zur ersten Bauform erläutert.

Bei dieser Bauform ist der am Kugelkörper 3 angeordnete Zapfen 10 mit einer Nut 17 versehen, in der das Federelement 4, hier ein im unbelasteten Zustand im Querschnitt kreisrunder O-Ring, angeordnet ist. Die Nut 17 fixiert den O-Ring in axialer Richtung auf dem Zapfen 10. In der Grundstellung ohne äußere Kräfte füllt das Federelement 4 die Nut 17 in axialer Richtung nicht ganz aus, so dass erst nach einer gewissen Verformung in Folge einer Verkippung des Kugelkörpers 3 das Federelement 4 nicht nur radial, sondern auch axial belastet wird, da die Nut 17 den Raum für das verformte Federelement 4 auch axial begrenzt, zusätzlich zur radialen Begrenzung durch die Wand 11a der Ausnehmung 11.

Am unteren Ende der Pfanne 2 ist hier ein Gewindezapfen 18 ausgebildet, mit dem die Pfanne 2 an eine Halterung angeschraubt werden kann. Der Gewindezapfen 18 liegt der Auflagefläche 6 an der Oberseite des Kugelkörpers 3 gegenüber.

Auf der Auflagefläche 6 ist hier ein Werkstück 20 angeordnet. Durch eine Riffelung 21 der Auflagefläche 6, hier eingearbeitet in das Metall des Kugelkörpers 3, hält das Werkstück 20 auch bei der leichten Verkippung noch auf der Auflagefläche 6. Bei anderen Ausführungsformen kann die Riffelung auch mit einem Gummimaterial ausgebildet sein.

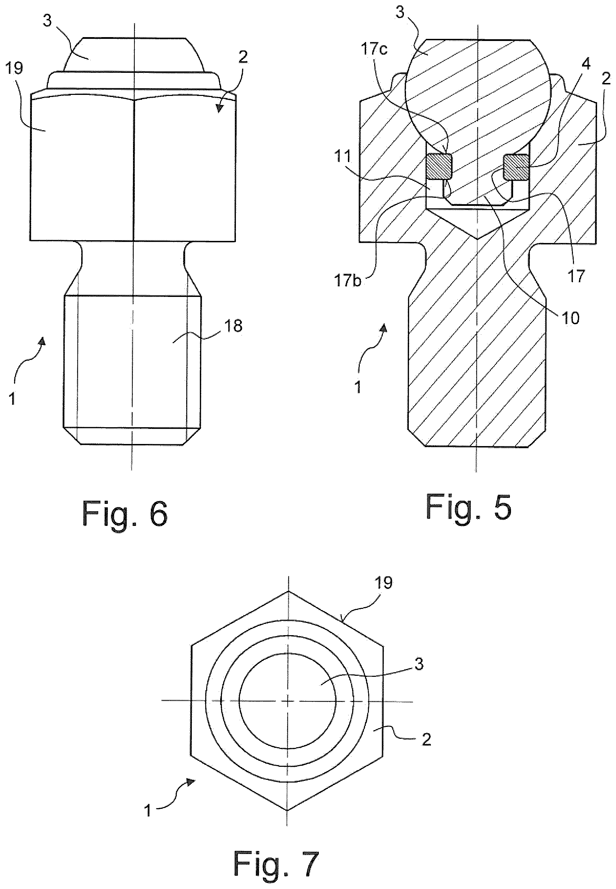

Die **Fig. 5, Fig. 6** und **Fig. 7** illustrieren eine vierte Bauform einer Auflagevorrichtung 1 für die Erfindung. Es werden vor allem die Unterscheide zur dritten Bauform erläutert.

Bei dieser Bauform ist das Federelement 4 auf dem Zapfen 10 des Kugelkörpers 3 als ein O-Ring mit näherungsweise rechteckigem, hier quadratischen Querschnitt ausgebildet. Der O-Ring liegt axial an den Rändern 17b, 17c der Nut 17 an, so dass es bei Auslenkung aus der in Fig. 5 gezeigten Grundstellung sofort sowohl zu einer radialen als auch einer axialen Belastung des Federelements 4 kommt. Dadurch wird eine besonders hohe Rückstellkraft erreicht. Zudem liegt der O-Ring in Grundstellung radial außen flächig an der Wand der Ausnehmung 11 an.

An der Außenseite der Pfanne 2 sind hier Schlüsselflächen 19 in Form einer hexagonalen Außenkontur ausgebildet. Dadurch kann der Gewindezapfen 18 auf einfache Weise mit einem Maulschlüssel in einer Gewindebohrung (nicht dargestellt) festgezogen werden.

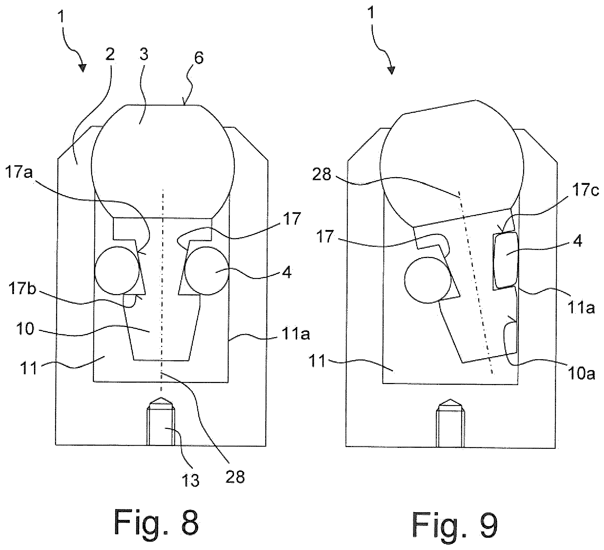

Die **Fig. 8** illustriert eine fünfte Bauform einer Auflagevorrichtung 1 für die Erfindung. Es werden wiederum vor allem die Unterscheide zur ersten Bauform erläutert.

Bei dieser Bauform ist der Kugelkörper 3 mit einer ebenen Auflagefläche 6 und die Pfanne 2 mit einer Bohrung 13 zur Befestigung versehen.

Der Zapfen 10, welcher am Kugelkörper 3 ausgebildet ist, weist eine umlaufende Nut 17 auf, die axial (in Fig. 8 von oben nach unten) länger ausgebildet ist als die axiale Ausdehnung des Federelements 4, hier eines O-Rings, in der unausgelenkten Grundstellung. Der O-Ring liegt an der Wand 11a der Ausnehmung 11 in der Pfanne 2 und am Grund 17a der Nut 17 an, wodurch er bereits geringfügig in radialer Richtung (in Fig. 8 von links nach rechts) belastet ist und geringfügig in axialer Richtung gespreizt wird. Der Nutgrund 17a verläuft hier in einem Winkel zur Achse 28 des Zapfens 10, so dass die Nut 17 in ihrem unteren Bereich radial weiter nach innen zur Zapfenachse 28 reicht als in ihrem oberen Bereich. Aufgrund einer radialen Spannung, mit der der O-Ring auf dem Zapfen 10 in der Nut 17 aufsitzt, ist der O-Ring in eine untere Position, in der er an einem unteren Rand 17b der Nut 17 anliegt, vorgespannt. Der O-Ring hätte im unbelasteten Zustand einen kreisrunden Querschnitt.

Wird die Auflagevorrichtung 1 ausgelenkt, wie in **Fig. 9** dargestellt, wird das Federelement 4 radial weiter zusammengedrückt und axial gespreizt und stößt schließlich auch an den oberen Rand 17c der Nut 17, wodurch sich die Rückstellkraft von diesem Zeitpunkt an deutlich erhöht.

Der Zapfen 10 weist in dieser Ausführungsform eine Kontaktfläche mit angepasster Geometrie 10a für die Anlage an der (hier gerade verlaufenden) Wand 11a der Ausnehmung 11 auf. Die Kontaktfläche mit angepasster Geometrie 10a verläuft in einem Winkel zur Achse 28 des Zapfens, der der maximalen Auslenkung des Zapfens 10 aus der Grundstellung entspricht. Es bildet sich ein linienhafter oder flächiger gegenseitiger Anschlag aus, der die Auslenkung des Kugelkörpers 3 begrenzt, aber den Zapfen 10 und die Pfanne 2 weniger mechanisch belastet als ein isolierter Anschlagpunkt, insbesondere in Hinblick auf Materialabtrag und Verschleiß.

Man beachte, dass hier der Nutgrund 17a bei der in Fig. 9 dargestellten, vollen Auslenkung des Zapfens 10 parallel zur Wand 11a verläuft, wodurch eine gleichmäßige und verschleißarme Belastung des Federelements 4 erreicht wird.

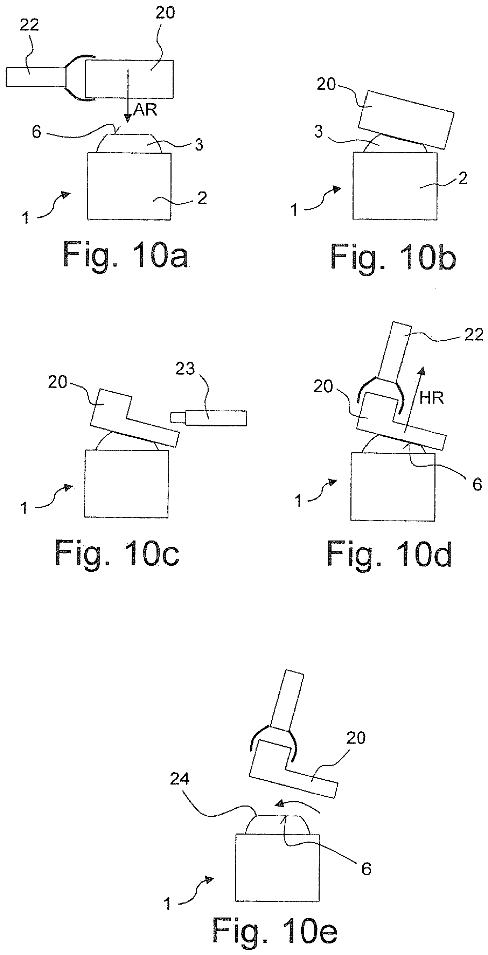

Die **Fig. 10a****-****Fig. 10e** illustrieren beispielhaft die Verwendung einer Auflagevorrichtung 1 bei der Bearbeitung von Werkstücken, zur allgemeinen Erläuterung.

Im gezeigten Beispiel, vgl. etwa die **Fig. 10a****,** ist eine Auflagefläche 6 an einem Kugelkörper 3 ausgebildet, der in einer Pfanne 2 gelagert ist.

Ein automatischer Werkstück-Transportroboter 22 bringt ein Werkstück 20, das entlang einer Richtung AR senkrecht zur Auflagefläche 6 angenähert und auf der Auflagefläche 6 abgelegt wird. Die Auflagevorrichtung 1 ist dabei in einem unausgelenkten Zustand, auch genannt Grundstellung, mit hier horizontaler Auflagefläche 6.

Sodann wird das Werkstück 20 verspannt, vgl. **Fig. 10b****,** typischerweise wobei das Werkstück 20 auf wenigstens drei Auflagevorrichtungen gelagert ist (zur Vereinfachung sind in Fig. 10b nur eine Auflagevorrichtung 1 und keine Spannmittel gezeigt). Dabei verkippt das Werkstück 20 samt Kugelkörper 3 gegenüber der Pfanne 2.

Am abgelegten Werkstück 20 wird nun mit der Bearbeitung begonnen, vgl. **Fig. 10c****.** Im illustrierten Beispiel trägt ein Fräser 23 Material des Werkstücks 20 ab.

Nach Abschluss der Bearbeitung wird das Werkstück 20 von einem Werkstück-Transportroboter 22 (dies kann derselbe wie in Fig. 10a sein, oder auch ein anderer Werkstück-Transportroboter) ergriffen und von der Auflagefläche 6 abgehoben, vgl. **Fig. 10d****.** Im gezeigten Beispiel ist beim Abheben die Auflagevorrichtung 1 noch in einem ausgelenkten Zustand, also die Auflagefläche 6 ist noch nicht horizontal, und das Abheben erfolgt in einer Richtung HR senkrecht zur Auflagefläche 6.

Nachdem das Werkstück 20 von der Auflagefläche 6 abgehoben ist, vgl. **Fig. 10e****,** schwenkt der Kugelkörper 3, angetrieben durch das Federelement (nicht dargestellt) der Auflagevorrichtung 1, zurück in die Grundstellung, so dass die Auflagefläche 6 wieder horizontal ausgerichtet ist. Sie ist dann bereit für die schonende Auflage eines nächsten Werkstücks 20.

Durch die automatische Rückstellung wird insbesondere vermieden, dass ein nächstes, automatisch zugestelltes Werkstück mit der Auflagevorrichtung 1 an einem (mangels Rückstellung nach oben hervorstehenden) Eck 24 kollidiert und so das Werkstück oder auch die Auflagevorrichtung 1 beschädigt wird.

Man beachte, dass je nach Anwendungsfall in Grundstellung einer Auflagevorrichtung 1 eine Auflagefläche 6 für das Werkstück 20 nicht nur horizontal, sondern grundsätzlich beliebig ausgerichtet sein kann, insbesondere auch verkippt gegen die Horizontale.

Die **Fig. 11** illustriert schließlich noch eine sechste Bauform einer Auflagevorrichtung 1 für die Erfindung, die neben den Bauteilen Pfanne 2 und Kugelkörper 3 (und dem nicht dargestellten Federelement) auch noch ein Formbauteil 25 aufweist, an dem die Auflagefläche 6 für das Werkstück oberseitig ausgebildet ist.

Das Formbauteil 25 ist hier in eine Bohrung 5, nämlich eine Gewindebohrung, des Kugelkörpers 3 eingeschraubt. Mit Formbauteilen 25 verschiedener Größe kann die Position der Auflagefläche 6 variiert, und insbesondere gegenüber der Pfanne 2 und dem Kugelkörper 3 angehoben werden, um eine Anpassung an die Maschinengegebenheiten und den Typ von zu bearbeitendem Werkstück vorzunehmen.

Die Auflagevorrichtung 1 ist hier weiterhin an einem Maschinentisch 26 befestigt dargestellt; man beachte, dass im Rahmen der Erfindung die Auflagevorrichtung davon abweichend an einem Roboterarm eines Werkstück-Roboters angeordnet wird (vgl. Fig. 12a-12d). Mittels einer Bohrung 13, nämlich einer Gewindebohrung, der Pfanne 2 wurde ein am Maschinentisch 26 verankerter Gewindebolzen 27 von der Unterseite in die Bohrung 13 eingeschraubt.

Die **Fig. 12a** zeigt eine beispielhafte Ausführungsform eines erfindungsgemäßen Werkzeug-Roboters 30, hier ausgebildet als ein Greifer mit zwei beweglichen Roboterarmen 31, 32.

Die Roboterarme 31, 32 sind hier an einem Grundkörper 33 in eine hier horizontale Klemmrichtung KR aufeinander zu und voneinander weg motorisch verfahrbar. Zudem ist der Grundkörper 33 durch nicht näher dargestellte Achsen translatierbar (bevorzugt in alle drei Raumrichtungen) und/oder rotierbar (bevorzugt um zwei Achsen).

An den Roboterarmen 31, 32 ist jeweils innenseitig eine erfindungsgemäße Auflagevorrichtung 1 angeordnet, wobei deren Auflageflächen 6, hier ausgebildet an den Kugelkörpern 3, einander gegenüberliegen, und die Pfannen 2 an den Roboterarmen 31, 32 befestigt sind. Die Auflagevorrichtungen 1 befinden sich, bedingt durch die Rückstellkraft ihrer Federelemente, zunächst in der Grundstellung, hier mit vertikal ausgerichteten Auflageflächen 6. Mit anderen Worten, die Auflageflächen 6 sind in der Grundstellung senkrecht zur Klemmrichtung KR ausgerichtet.

Der Werkzeug-Roboter 30 ist bereits zu einem Werkstück 20 verfahren worden, das sich nun zwischen den Auflagevorrichtungen 1 befindet; erforderlichenfalls wurden dafür die Roboterarme 31, 32 dafür zunächst aufgespreizt. In der gezeigten Ausführungsform ist der Werkstück-Roboter 30 so zum Werkstück 20 ausgerichtet, dass die rechtsseitige Auflagefläche 6 (am Roboterarm 32) parallel zur gegenüberliegenden Seitenfläche 34 des Werkstücks 20 ausgerichtet ist.

Sodann werden die Roboterarme 31 und 32 auf das Werkstück 20 zu gefahren. Dabei legen sich die Auflageflächen 6 an das Werkstück 20 an. Die Klemmrichtung KR stellt hier auch eine Anlegerichtung AR der Auflageflächen 6 dar. Die Anlegerichtung AR ist hier senkrecht zur jeweiligen Auflagefläche 6. Auf der rechten Seite des Werkstücks 20 ist die Anlegerichtung AR auch senkrecht zu der der Auflagefläche 6 zugewandten Werkstückseite 34; auf der linken Seite des Werkstücks 20 ist jedoch die Auflagefläche 6 gegenüber der zugewandten Werkstückseite 35 geringfügig verkippt.

Im Allgemeinen ist es bevorzugt, wenn bei einer jeweiligen Auflagevorrichtung 1 die Anlegerichtung AR senkrecht zur zugehörigen Auflagefläche 6 und senkrecht zur zugehörigen (ebenen) Werkstückseite 34, 35 verläuft.

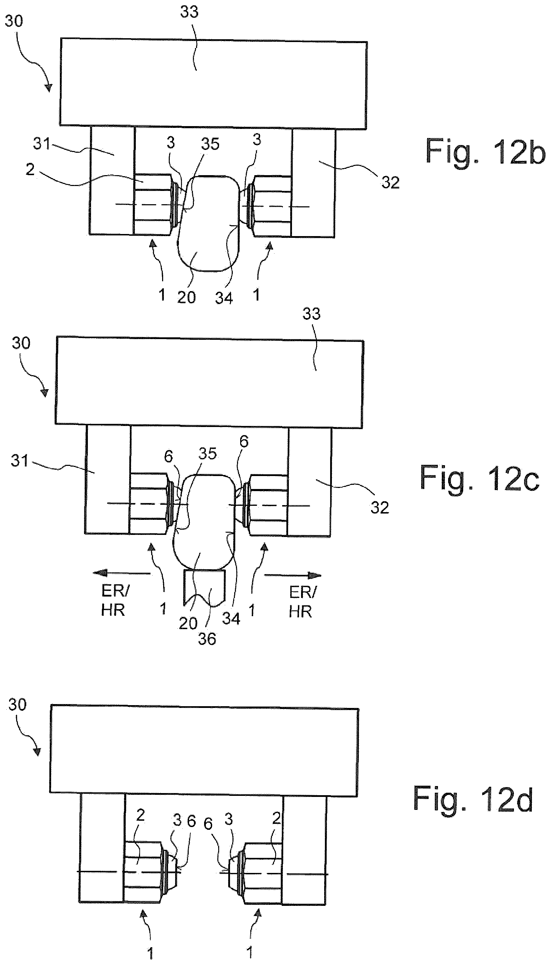

**Fig. 12b** zeigt einen Zustand des Werkstück-Roboters 30, in welchem das Werkstück 20 nunmehr zwischen den Auflagevorrichtungen 1 verspannt ist, also das Werkstück 20 gehalten wird, hier durch Kraftschluss. Aufgrund der Gestalt des Werkstücks 20, mit den zueinander nicht parallelen Werkstückseiten (Seitenflächen) 34, 35, wurde hier beim Verspannen der Kugelkörper 3 der linksseitigen Auflagevorrichtung 1 (am Roboterarm 31) in seiner Pfanne 2 aus der Grundstellung ausgelenkt. Im dargestellten Fall wurde der Kugelkörper 3 auf der rechten Seite (am Roboterarm 32) hingegen nicht bzw. nur minimal ausgelenkt.

Im eingespannten Zustand kann das Werkstück 20 nun transportiert werden (etwa indem der Grundkörper 33 translatiert wird) und/oder gehandhabt werden (etwa indem der Grundkörper 33 gedreht wird).

Zum Ablagen des Werkstücks 20, vgl. **Fig. 12c****,** verfährt der Werkstück-Roboter 30 bzw. dessen Grundkörper 33 zu einer Werkstückablage 36 und fährt das Werkstück 20 hier von oben an die Werkstückablage 36 heran, in der Regel so dass bereits ein Kontakt zwischen dem Werkstück 20 und der Werkstückablage 36 eintritt.

Sodann werden die Roboterarme 31, 32 in Entklemmrichtung ER auseinander gefahren; die Anlageflächen 6 werden sozusagen in einer Heberichtung HR von der jeweiligen Werkstückseite 34, 35 abgehoben. Auf der rechten Seite (bei Roboterarm 32) ist die Heberichtung HR senkrecht zur Auflagefläche 6 und auch senkrecht zur zugehörigen Werkstückseite 34. Auf der linken Seite (bei Roboterarm 31) ist die Heberichtung HR gegenüber der Normalen der Auflagefläche 6 und der Normalen der Werkstückseite 35 geringfügig verkippt.

Im Allgemeinen ist es bevorzugt, wenn bei einer jeweiligen Auflagevorrichtung 1 die Heberichtung HR senkrecht zur zugehörigen Auflagefläche 6 und senkrecht zur zugehörigen Werkstückseite 34, 35 verläuft.

Spätestens wenn der Kontakt zwischen den Auflageflächen 6 und dem Werkstück verloren gegangen ist, schwenken die Auflagevorrichtungen 1, soweit erforderlich, wieder in die Grundstellung zurück, vgl. **Fig. 12d****,** d.h. die Kugelkörper 3 werden durch die Rückstellkraft der Federelemente wieder so in den Pfannen 2 ausgerichtet, dass hier die Auflageflächen 6 vertikal ausgerichtet sind. Fig. 12d zeigt den Zustand des Werkstück-Roboters 30 nach diesem Zurückschwenken und vom Werkstück bzw. von der Werkstückablage weggefahren, in einer Ausgangsstellung. Der Werkstück-Roboter 30 ist für das Ergreifen eines weiteren Werkstücks bereit (vgl. Fig. 12a), und so fort.

Zusammenfassend betrifft die Erfindung einen Werkstückroboter mit einer pendelnd gelagerten, als Kugelpfannengelenk ausgebildeten Auflagevorrichtung. Solche Pendelauflagen werden zur statisch eindeutigen Auflage von Bauteilen mit mehr oder weniger exakter Oberfläche verwendet. Bekannte Pendelauflagen mit Federrückstellung sind aus vielen Bauteilen zusammengesetzt, was eine teure Herstellung verursacht und sich als entsprechend wartungsanfällig erweisen kann. Mit vorliegender Erfindung wird ein einfaches, kostengünstiges Konzept aufgezeigt.

### Bezugszeichenliste:

- 1: Auflagevorrichtung
- 2: Pfanne
- 3: Kugelkörper
- 4: Federelement
- 5: Kugel-Bohrung
- 6: Auflagefläche
- 7: Pfannenachse
- 8: Kugelkörperachse
- 9: Hohlkugelförmige Ausnehmung der Pfanne
- 10: Zapfen
- 10a: angepasste Geometrie
- 11: Ausnehmung
- 11a: Wand der Ausnehmung
- 12: Anschlagpunkt
- 13: Pfannen-Bohrung
- 14: Ende des Zapfens
- 15: Unterseite der Pfanne
- 16: Pfannengrund
- 17: Nut
- 17a: Nutgrund
- 17b: unterer Rand der Nut
- 17c: oberer Rand der Nut
- 18: Gewindezapfen
- 19: Schlüsselfläche
- 20: Werkstück
- 21: Riffelung
- 22: Werkstück-Transportroboter
- 23: Fräser
- 24: Eck
- 25: Formbauteil
- 26: Maschinentisch
- 27: Gewindebolzen
- 28: Zapfenachse
- 29: Ausnehmungsachse
- 30: Werkstück-Roboter
- 31: Roboterarm
- 32: Roboterarm
- 33: Grundkörper
- 34: Werkstückseite
- 35: Werkstückseite
- 36: Werkstückablage
- AR: Richtung der Annäherung (Anlegerichtung)
- ER: Entklemmrichtung
- KR: Klemmrichtung
- HR: Richtung des Abhebens (Heberichtung)
- M: Kugelmittelpunkt

## Patentansprüche

1. Werkstück-Roboter (30) für die Handhabung und/oder den Transport von Werkstücken (20),
umfassend wenigstens einen beweglichen Roboterarm (31, 32), der mit einer Auflagevorrichtung (1) versehen ist,
wobei die Auflagevorrichtung (1) pendelnd gelagert, als Kugelpfannengelenk ausgebildet ist zur Auflage und/oder Anlage von Werkstücken (20), bestehend aus wenigstens zwei Bauteilen, wobei eines eine wenigstens einteilige Pfanne (2) und das andere ein wenigstens einteiliger Kugelkörper (3) ist,
wobei ein Zapfen (10) und eine um den Zapfen (10) umlaufende Ausnehmung (11) wechselseitig an einem der beiden Bauteile Pfanne (2) oder Kugelkörper (3) ausgebildet sind,
und wobei zwischen dem Zapfen (10) und der Ausnehmung (11) wenigstens ein elastisch verformbares Federelement (4) mit im unbelasteten Zustand vorzugsweise rotationstorischer Außenfläche angeordnet ist, welches in Grundstellung von jeder radialen Richtung etwa gleich vorbelastet ist.

2. Werkstück-Roboter (30) nach Anspruch 1, **dadurch gekennzeichnet, dass** eine Achse (28) des Zapfens (10) den Mittelpunkt (M) des Kugelkörpers (3) schneidet, wobei der Zapfen (10) als vorzugsweise konisches oder zylindrisches Formelement mit dem Kugelkörper (3), vorzugsweise als einteiliges Element, ausgestaltet ist.

3. Werkstück-Roboter (30) nach einem der vorhergehenden Ansprüche, **dadurch gekennzeichnet, dass** an dem Kugelkörper (3) oder an der Pfanne (2) eine Auflagefläche (6) für das Werkstück (20) ausgebildet ist, insbesondere wobei die Auflagefläche (6) im Wesentlichen eben ausgebildet ist.

4. Werkstück-Roboter (30) nach einem der vorhergehenden Ansprüche, **dadurch gekennzeichnet,**
**dass** die Auflagevorrichtung (1) eines drittes Bauteil, nämlich ein Formbauteil (25) mit einer Auflagefläche (6) für das Werkstück (20) aufweist, insbesondere wobei die Auflagefläche (6) im Wesentlichen eben ausgebildet ist,
und **dass** das Formbauteil (25) am Kugelkörper (3) oder an der Pfanne (2) befestigbar ist, insbesondere in einer Bohrung (5; 13), vorzugsweise Gewindebohrung, des Kugelkörpers (3) oder der Pfanne (2).

5. Werkstück-Roboter (30) nach Anspruch 3 oder 4, **dadurch gekennzeichnet, dass** die dem Werkstück (20) zugewandte Auflagefläche (6) von Kugelkörper (3) oder Pfanne (2) oder Formbauteil (25) eine wenigstens teilweise unterbrochene Oberfläche, vorzugsweise mit Riffelung (21), aufweist.

6. Werkstück-Roboter (30) nach einem der vorhergehenden Ansprüche, **dadurch gekennzeichnet, dass** als Federelement (4) ein O-Ring angeordnet ist.

7. Werkstück-Roboter (30) nach Anspruch 6, **dadurch gekennzeichnet, dass** der O-Ring auf dem Zapfen (10) aufsitzt und in Grundstellung über seinen gesamten Umfang zwischen dem Zapfen (10) und der Ausnehmung (11) radial eingeklemmt ist,
insbesondere so dass in Grundstellung der Zapfen (10) und die Ausnehmung (11) koaxial ausgerichtet sind.

8. Werkstück-Roboter (30) nach einem der Ansprüche 6 oder 7, **dadurch gekennzeichnet, dass** der O-Ring einen im unbelasteten Zustand kreisförmigen, ovalen oder rechteckigen Querschnitt aufweist.

9. Werkstück-Roboter (30) nach einem der Ansprüche 6 bis 8, **dadurch gekennzeichnet, dass** der O-Ring von einem äußeren Ende (14) des Zapfens (10) beabstandet angeordnet ist.

10. Werkstück-Roboter (30) nach einem der vorhergehenden Ansprüche, **dadurch gekennzeichnet, dass** der Zapfen (10) und die Ausnehmung (11) jeweils im Wesentlichen kreiszylindrisch ausgebildet sind.

11. Werkstück-Roboter (30) nach einem der vorhergehenden Ansprüche, **dadurch gekennzeichnet, dass** die Ausnehmung (11) geschlossen ausgebildet ist, insbesondere wobei die Ausnehmung (11) durch die Pfanne (2) und den Kugelkörper (3) allseitig begrenzt ist.

12. Werkstück-Roboter (30) nach einem der vorhergehenden Ansprüche, **dadurch gekennzeichnet, dass** das wenigstens eine Federelement (4) zumindest in einer aus der Grundstellung ausgelenkten Stellung auch axial belastet wird,
insbesondere wobei während eines ersten Teils der Auslenkung das wenigstens eine Federelement (4) zunächst nur radial belastet wird, und während eines zweiten Teils der Auslenkung auch axial belastet wird.

13. Werkstück-Roboter (30) nach einem der vorhergehenden Ansprüche, **dadurch gekennzeichnet, dass** am Zapfen (10) wenigstens eine Nute (17) oder eine Führung ausgebildet ist, in welche das wenigstens eine Federelement (4) eingesetzt ist.

14. Werkstück-Roboter (30) nach einem der vorhergehenden Ansprüche, **dadurch gekennzeichnet, dass** die Länge des Zapfens (10) so gewählt ist, dass sich ein winkelbegrenzender Anschlag oder Anschlagpunkt (12) an der Ausnehmung (11) ergibt,
insbesondere wobei der Zapfen (10) an seinem die Ausnehmung (11) berührenden Ende (14) eine zur Ausnehmung (11) formangepasste Geometrie (10a) aufweist.

15. Werkstück-Roboter (30) nach einem der vorhergehenden Ansprüche, **dadurch gekennzeichnet, dass** zwischen Zapfen (10) und der Ausnehmung (11) ein Federelement mit passgenauer Negativform der beiden Elemente Zapfen (10) und Ausnehmung (11) angeordnet ist.

16. Werkstück-Roboter (30) nach einem der vorhergehenden Ansprüche, **dadurch gekennzeichnet, dass** wenigstens eines der Bauelemente Kugelkörper (3) oder Pfanne (2) mit einer Bohrung (5, 13), vorzugsweise Gewindebohrung, an einem außenliegenden Vorrichtungsende versehen ist,
insbesondere wobei die Bohrung (5; 13) einer Auflagefläche (6) für das Werkstück (20) gegenüberliegt.

17. Werkstück-Roboter (30) nach einem der Ansprüche 1 bis 16, **dadurch gekennzeichnet, dass** der Werkstück-Roboter (30) wenigstens zwei bewegliche Roboterarme (31, 32) umfasst, die jeweils mit einer Auflagevorrichtung (1) versehen sind.

18. Werkstück-Roboter (30) nach Anspruch 17, **dadurch gekennzeichnet, dass** der Werkstück-Roboter (30) als ein Greifer ausgebildet ist, wobei die zwei Roboterarme (31, 32) an einem Grundkörper (33) in eine Klemmrichtung (KR) aufeinander zu und voneinander weg motorisch verfahrbar sind, und der Grundkörper (33) durch Achsen translatierbar und/oder rotierbar ist.

19. Verwendung eines Werkstück-Roboters (30) nach einem der vorhergehenden Ansprüche zur Handhabung und/oder zum Transport von Werkstücken (20), mit folgenden Schritten:
a) in Grundstellung der Auflagevorrichtung (1) des wenigstens einen Roboterarms (31, 32) wird die Auflagevorrichtung (1) des wenigstens einen Roboterarms (31, 32) mit dem Roboterarm (31, 32) an das Werkstück (20) herangefahren und am Werkstück (20) angeordnet, insbesondere wobei eine Auflagefläche (6) der Auflagevorrichtung (1) in einer Richtung (AR) senkrecht zur Auflagefläche (6) an eine Werkstückseite (34, 35) angelegt wird,
b) das Werkstück (20) wird mittels des wenigstens einen Roboterarms (31, 32) gehandhabt und/oder transportiert, und die Auflagevorrichtung (1) des wenigstens einen Roboterarms (31, 32) wird vom Werkstück (20) abgehoben,
wobei für die Handhabung und/oder den Transport des Werkstücks (20) und/oder das Abheben die Pfanne (2) relativ zum Kugelkörper (3) bewegt wird,
insbesondere wobei sich die Relativbewegung von Pfanne (2) und Kugelkörper (3) durch ein Verspannen des Werkstücks (20) mittels des wenigstens einen Roboterarms (31, 32) ergibt,
c) die Auflagevorrichtung (1) nimmt selbsttätig wieder die Grundstellung ein, und .
d) sodann werden die Schritte a) bis c) wenigstens einmal mit einem jeweiligen weiteren Werkstück wiederholt.

## Claims

1. Workpiece robot (30) for handling and/or transporting workpieces (20),
comprising at least one movable robot arm (31, 32) which is provided with a support device (1),
wherein the support device (19) is mounted in an oscillating manner, designed as a ball socket joint for supporting and/or abutting workpieces (20), consisting of at least two components, wherein one is an at least one-piece socket (2) and the other is an at least one-piece ball member (3),
wherein a pin (10) and a recess (11) that surrounds the pin (10) are alternately formed on one of the two components socket (2) or ball member (3),
and wherein between the pin (10) and the recess (11) at least one elastically deformable spring element (4) with preferably rotationally toric outer surface in the unloaded state is arranged which, in the basic position, is approximately equally pre-loaded in each radial direction.

2. Workpiece robot (30) according to claim 1, **characterized in that** an axis (28) of the pin (10) intersects the center (M) of the ball member (3), wherein the pin (10) is designed as a preferably conical or cylindrical form element with the ball member (3), preferably as one-piece element.

3. Workpiece robot (30) according to any one of the preceding claims, **characterized in that** a support surface (6) for the workpiece (20) is formed on the ball member (3) or on the socket (2), in particular wherein the support surface (6) is designed to be substantially flat.

4. Workpiece robot (30) according to any one of the preceding claims, **characterized in**
**that** the support device (1) comprises a third component, namely a form component (25) with a support surface (6) for the workpiece (20), in particular wherein the support surface (6) is designed to be substantially flat,
and **that** the form component (25) can be mounted to the ball member (3) or the socket (2), in particular in a bore (5; 13), preferably a threaded bore, of the ball member (3) or of the socket (2).

5. Workpiece robot (30) according to claim 3 or 4, **characterized in that** the support surface (6) of the ball member (3) or socket (2) or form component (25), which faces the workpiece (20), has an at least partially interrupted surface, preferably comprising a corrugation (21).

6. Workpiece robot (30) according to any one of the preceding claims, **characterized in that** an O-ring is arranged as spring element (4).

7. Workpiece robot (30) according to claim 6, **characterized in that** the O-ring is supported on the pin (10) and, in the basic position, is radially clamped over its entire circumference between the pin (10) and the recess (11),
in particular such that in the basic position, the pin (10) and the recess (11) are aligned coaxially.

8. Workpiece robot (30) according to any one of the claims 6 or 7, **characterized in that** in the unloaded state, the O-ring has a circular, oval or rectangular cross-section.

9. Workpiece robot (30) according to any one of the claims 6 to 8, **characterized in that** the O-ring is arranged at a distance from an outer end (14) of the pin (10).

10. Workpiece robot (30) according to any one of the preceding claims, **characterized in that** the pin (10) and the recess (11) are each designed to be substantially circular cylindrical.

11. Workpiece robot (30) according to any one of the preceding claims, **characterized in that** the recess (11) is designed to be closed, in particular wherein the recess (11) is delimited from all sides by the socket (2) and the ball member (3).

12. Workpiece robot (30) according to any one of the preceding claims, **characterized in that** the at least one spring element (4) is also axially loaded at least in a position deflected from the basic position,
in particular wherein during a first part of the deflection, the at least one spring element (4) is initially only radially loaded and during a second part of the deflection it is also axially loaded.

13. Workpiece robot (30) according to any one of the preceding claims, **characterized in that** at least one groove (17) or a guide is formed on the pin (10), into which the at least one spring element (4) is inserted.

14. Workpiece robot (30) according to any one of the preceding claims, **characterized in that** the length of the pin (10) is selected such that an angle-limiting stop or stop point (12) is generated on the recess (11),
in particular wherein the pin (10) comprises at its end (14) contacting the recess (11) a geometrical form (10a) which is adapted to the shape of the recess (11).

15. Workpiece robot (30) according to any one of the preceding claims, **characterized in that** between the pin (10) an the recess (11) a spring element is arranged having the exactly fitting negative shape of the two elements pin (10) and recess (11).

16. Workpiece robot (30) according to any one of the preceding claims, **characterized in that** at least one of the components ball member (3) or socket (29 is provided with a bore (5, 13), preferably a threaded bore, on an external device end,
in particular wherein the bore (5; 13) is opposite to a support surface (6) for the workpiece (20).

17. Workpiece robot (30) according to any one of the claims 1 to 16, **characterized in that** the workpiece robot (30) comprises at least two movable robot arms (31, 32) which are each provided with a support device (1).

18. Workpiece robot (30) according to claim 17, **characterized in that** the workpiece robot (30) is designed as a gripper, wherein the two robot arms (31, 32) can be moved on a basic body (33) in a clamping direction (KR) towards and away from each other by means of a motor, and that the basic body (33) can be translated and/or rotated via axes.

19. The use of a workpiece robot (30) according to any one of the preceding claims for handling and/or transporting workpieces (20), comprising the following steps:
a) in the basic position of the support device (1) of the at least one robot arm (31, 32), the support device (1) of the at least one robot arm (31, 32) is moved with the robot arm (31, 32) to the workpiece (20) and is arranged on the workpiece (20),
in particular wherein a support surface (6) of the support device (1) is applied to a workpiece side (34, 35) in a direction (AR) perpendicular to the support surface (6),
b) the workpiece (20) is handled and/or transported by means of the at least one robot arm (31, 32) and the support device (1) of the at least one robot arm (31, 32) is lifted off from the workpiece (20),
wherein for handling and/or transporting the workpiece (20) and/or lifting off, the socket (2) is moved relative to the ball member (3), in particular wherein the relative movement of socket (2) and ball member (3) results from tensioning the workpiece (20) by means of the at least one robot arm (31, 32),
c) the support device (1) automatically reassumes the basic position, and
d) followed by repeating the steps a) to c) at least once with a respective further workpiece.

## Revendications

1. Robot (30) porte-pièces dévolu à la manipulation et/ou au transport de pièces (20),
comprenant au moins un bras mobile automatisé (31, 32), muni d'un dispositif d'appui (1),
ledit dispositif d'appui (1) étant monté de manière oscillante, en tant qu'articulation à rotule destinée à procurer un appui et/ou un contact à des pièces (20), et étant composé d'au moins deux éléments structurels dont l'un est une cuvette (2) constituée au moins d'un seul bloc, et l'autre est un corps sphérique (3) constitué au moins d'un seul bloc, sachant qu'un tenon (10), et un évidement (11) ceinturant périphériquement ledit tenon (10), sont interactivement ménagés sur l'un des deux éléments structurels se présentant comme ladite cuvette (2) ou comme ledit corps sphérique (3),
et sachant qu'un moins un élément élastique (4) élastiquement déformable, interposé entre ledit tenon (10) et ledit évidement (11), et doté d'une surface extérieure présentant de préférence une toricité rotationnelle à l'état non contraint, est précontraint de manière sensiblement identique en position de base, depuis chaque direction radiale.

2. Robot (30) porte-pièces selon la revendication 1, **caractérisé par le fait qu'**un axe (28) du tenon (10) coupe le centre (M) du corps sphérique (3), ledit tenon (10) étant réalisé, avec ledit corps sphérique (3), sous la forme d'un élément moulé préférentiellement conique ou cylindrique, de préférence en tant qu'élément monobloc.

3. Robot (30) porte-pièces selon l'une des revendications précédentes, **caractérisé par le fait qu'**une surface d'appui (6), dédiée à la pièce (20), est ménagée sur le corps sphérique (3) ou sur la cuvette (2), ladite surface d'appui (6) étant notamment de réalisation plane pour l'essentiel.

4. Robot (30) porte-pièces selon l'une des revendications précédentes, **caractérisé par le fait**
**que** le dispositif d'appui (1) inclut un troisième élément structurel, à savoir un élément structurel moulé (25) pourvu d'une surface d'appui (6) dévolue à la pièce (20), ladite surface d'appui (6) étant notamment de réalisation plane pour l'essentiel ;
et par le fait que ledit élément structurel moulé (25) peut être fixé au corps sphérique (3) ou à la cuvette (2), en particulier dans un perçage (5 ; 13), de préférence un perçage taraudé dudit corps sphérique (3) ou de ladite cuvette (2).

5. Robot (30) porte-pièces selon la revendication 3 ou 4, **caractérisé par le fait que** la surface d'appui (6) du corps sphérique (3) ou de la cuvette (2), voire de l'élément structurel moulé (25), qui est tournée vers la pièce (20), présente une surface au moins partiellement discontinue préférentiellement munie de striures (21).

6. Robot (30) porte-pièces selon l'une des revendications précédentes, **caractérisé par le fait qu'**une bague torique est implantée en tant qu'élément élastique (4).

7. Robot (30) porte-pièces selon la revendication 6, **caractérisé par le fait que** la bague torique est mise en place sur le tenon (10) et est coincée radialement entre ledit tenon (10) et l'évidement (11) en position de base, par l'intégralité de son pourtour, notamment de façon telle que ledit tenon (10) et ledit évidement (11) soient orientés coaxialement en position de base.

8. Robot (30) porte-pièces selon l'une des revendications 6 ou 7, **caractérisé par le fait que** la bague torique présente une section transversale circulaire, ovale ou rectangulaire à l'état non contraint.

9. Robot (30) porte-pièces selon l'une des revendications 6 à 8, **caractérisé par le fait que** la bague torique est placée à distance d'une extrémité extérieure (14) du tenon (10).

10. Robot (30) porte-pièces selon l'une des revendications précédentes, **caractérisé par le fait que** le tenon (10) et l'évidement (11) sont, à chaque fois, de réalisation substantiellement cylindrique droite.

11. Robot (30) porte-pièces selon l'une des revendications précédentes, **caractérisé par le fait que** l'évidement (11) est de réalisation fermée, ledit évidement (11) étant notamment délimité, de toutes parts, par la cuvette (2) et par le corps sphérique (3).

12. Robot (30) porte-pièces selon l'une des revendications précédentes, **caractérisé par le fait que** l'élément élastique (4) à présence minimale est contraint, dans le sens axial également, au moins dans une position d'excursion pivotante à partir de la position de base,
sachant notamment que ledit élément élastique (4), à présence minimale, est d'abord contraint dans le sens radial uniquement, durant une première partie de l'excursion pivotante et est contraint, dans le sens axial également, durant une seconde partie de ladite excursion pivotante.

13. Robot (30) porte-pièces selon l'une des revendications précédentes, **caractérisé par le fait qu'**au moins une rainure (17) ou un guide, dans laquelle (lequel) l'élément élastique (4) à présence minimale est inséré, est façonné(e) sur le tenon (10).

14. Robot (30) porte-pièces selon l'une des revendications précédentes, **caractérisé par le fait que** la longueur du tenon (10) est choisie de manière à procurer une butée ou un point d'arrêt (12) à effet de limitation angulaire, au niveau de l'évidement (11),
ledit tenon (10) étant notamment doté, à son extrémité (14) en contact avec l'évidement (11), d'une configuration géométrique (10a) dont la forme est adaptée à celle dudit évidement (11).

15. Robot (30) porte-pièces selon l'une des revendications précédentes, **caractérisé par le fait qu'**un élément élastique, doté d'un profilage négatif dont la forme s'adapte précisément aux deux éléments constitués du tenon (10) et de l'évidement (11), est interposé entre ledit tenon (10) et ledit évidement (11).

16. Robot (30) porte-pièces selon l'une des revendications précédentes, **caractérisé par le fait qu'**au moins l'un des éléments structurels, se présentant comme le corps sphérique (3) ou comme la cuvette (2), est muni d'un perçage (5, 13), de préférence d'un perçage taraudé, à une extrémité du dispositif située à l'extérieur,
sachant notamment que ledit perçage (5 ; 13) pointe vers une surface d'appui (6) dédiée à la pièce (20).

17. Robot (30) porte-pièces selon l'une des revendications 1 à 16, **caractérisé par le fait que** ledit robot (30) porte-pièces compte au moins deux bras mobiles automatisés (31, 32), respectivement munis d'un dispositif d'appui (1).

18. Robot (30) porte-pièces selon la revendication 17, **caractérisé par le fait que** ledit robot (30) porte-pièces est réalisé sous la forme d'un élément de préhension, sachant que les deux bras automatisés (31, 32) peuvent être déplacés en mode motorisé, sur un corps de base (33), l'un vers l'autre et à l'écart l'un de l'autre dans une direction de coincement (KR), ledit corps de base (33) pouvant être animé de translations et/ou de rotations au moyen d'axes.

19. Utilisation d'un robot (30) porte-pièces conforme à l'une des revendications précédentes, en vue de la manipulation et/ou du transport de pièces (20), incluant les étapes suivantes :
a) en position de base du dispositif d'appui (1) du bras automatisé (31, 32) à présence minimale, ledit dispositif d'appui (1) du bras automatisé (31, 32) à présence minimale est présenté à la pièce (20) avec ledit bras automatisé (31, 32), puis positionné sur ladite pièce (20), sachant notamment qu'une surface d'appui (6) dudit dispositif d'appui (1) est mise en applique contre un côté (34, 35) de ladite pièce, dans une direction (AR) perpendiculaire à ladite surface d'appui (6),
b) ladite pièce (20) est manipulée et/ou transportée au moyen dudit bras automatisé (31, 32) à présence minimale, puis le dispositif d'appui (1) dudit bras automatisé (31, 32) à présence minimale est soulevé à l'écart de ladite pièce (20),
un mouvement étant imprimé à la cuvette (2), par rapport au corps sphérique (3), en vue de la manipulation et/ou du transport de ladite pièce (20) et/ou en vue du soulèvement, sachant notamment que le mouvement relatif de ladite cuvette (2) et dudit corps sphérique (3) résulte d'un ablocage de ladite pièce (20) au moyen dudit bras automatisé (31, 32) à présence minimale,
c) ledit dispositif d'appui (1) reprend automatiquement ladite position de base, et
d) les étapes a) à c) sont ensuite réitérées au moins une fois avec une autre pièce respective.
